# EUROPEAN PATENT APPLICATION

(11) **EP 3 009 224 A1**
(43) Date of publication of application: **20.04.2016**
(21) Application number: 14382406.8
(22) Date of filing: 17.10.2014
(51) Int. Cl.: B23Q 1/01, B23Q 11/00

(54) **Gantry machine tool with torsion compensating device**

(71) Applicant: Bostek Innovation S.L.U., 20159 Asteasu (Gipuzkoa) (ES)
(72) Inventor: Dravasa Gurruchaga, Juan José, 20159 Asteasu-Gipuzkoa (ES); García Calderón, Emilio, 20159 Asteasu-Gipuzkoa (ES)
(74) Representative: Stiebe, Lars Magnus

(57) **Abstract**

The machine tool comprises two vertical columns (1), a horizontal support crossbeam (3) displaceable vertically and at least one carriage (4) that supports a tool holder head (6), the support crossbeam (3) comprising a longitudinal guide (2) on which the carriage can slide. The horizontal guide comprises a first vertical guiding surface (21) and a second vertical guiding surface (22) separated according to the (Z) vertical direction, and the carriage (4) comprises at least one first hydrostatic cell (51) and a second hydrostatic cell (52), which are configured to provide a film of hydrostatic fluid between the carriage (4) and the first and second vertical guiding surfaces (21, 22) of the longitudinal guide (2), respectively. The machine comprises control means (10) of the flow of hydrostatic fluid that can vary the flow of hydrostatic fluid provided by at least one of the cells (51, 52) to cause an angular displacement of the carriage (4) with respect to the support crossbeam (3) in a vertical plane perpendicular to the X axis.

## Description

### TECHNICAL FIELD

The present invention is encompassed within the field of machine tools, and more specifically within the field of gantry machine tools with large columns that comprise counterbalancing devices or systems for the deviations of the vertical position of the columns.

### BACKGROUND OF THE INVENTION

Gantry machine tools (composed of two vertical columns and a horizontal joist), fixed or mobile, comprise a horizontal support crossbeam displaceable vertically (according to a Z axis) along two vertical columns or poles arranged at the ends of a rotating plate or working table where the workpieces to be machined can be placed. On the support crossbeam a sliding carriage is mounted in a movable manner in the horizontal direction (according to an X axis), which holds a tool holder head that can move vertically to work on the workpiece. In some occasions, there are two tool holder heads, which can move on their corresponding carriage.

The problem is that the weight of the support crossbeam and the tool holder heads makes the columns move forward with respect to the Z vertical axis. In order to solve this problem, counterbalancing systems based on cables or braces tied to the columns and which pull from the same to counterbalance the aforementioned deviations from the vertical position are used. A system of this type is described, for example, in US 3,264,905.

In addition, once the machining work of the workpiece begins, the head has to move with respect to the support crossbeam in the X direction, depending on the works to be undertaken. This displacement of the head produces (due to the weight thereof) torsion on the support crossbeam, which takes place to a greater or lesser extent according to the position of the head in the X direction.

### DESCRIPTION OF THE INVENTION

The object of the invention is a machine tool that comprises a counterbalancing system that makes it possible to correct or counterbalance the vertical position of the tool holder head of a machine tool comprising a horizontal support crossbeam displaceable vertically, in a Z vertical direction, in a guided manner in the two vertical columns and at least one carriage that supports a tool holder head, the horizontal support crossbeam comprising a longitudinal guide on which the carriage can slide in an X horizontal direction.

According to the invention, the longitudinal guide comprises a first vertical guiding surface and a second vertical guiding surface, separated according to the Z vertical direction, and the carriage comprises at least one first hydrostatic cell and a second hydrostatic cell configured to provide a film of hydrostatic fluid between the carriage and the first and second vertical guiding surface of the longitudinal guide, respectively. The term vertical means that in a non-deformed state of the columns and the horizontal guide, the guiding surfaces would be in a vertical position, although it is understood that due to the deformation produced by the weight of the head, these surfaces might exhibit a small deviation with respect to the vertical plane during the operation of the machine. The machine comprises control means of the flow of hydrostatic fluid that can vary the flow of hydrostatic fluid provided by at least one of the hydrostatic cells to cause an angular displacement of the carriage with respect to the horizontal support crossbeam in a vertical plane perpendicular to the X axis. This means that in order to correct the position of the head, it is sufficient to increase or decrease the flow of fluid in the hydrostatic cells, in one or both, with the understanding that the combination of flows in both cells leads to more or less angular displacement of the carriage, and therefore, of the head.

The longitudinal guide can comprise:
a third vertical guiding surface, parallel to the first vertical guiding surface, and the carriage a third hydrostatic cell configured to provide a film of hydrostatic fluid between the carriage and the third vertical guiding surface, the third cell being hydraulically connected to the second cell;
a fourth vertical guiding surface, parallel to the second vertical guiding surface, and the carriage a fourth hydrostatic cell configured to provide a film of hydrostatic fluid between the carriage and the fourth vertical guiding surface, the fourth cell being hydraulically connected to the first cell.

The third vertical guiding surface will preferably face the first vertical guiding surface in order to achieve a better transversal guiding between the carriage and the horizontal support crossbeam. Likewise, the second vertical guiding surface will preferably face the fourth vertical guiding surface

The first vertical guiding surface and the second vertical guiding surface are preferably in a first plane, this plane being a first ZX vertical plane, parallel to the first vertical plane.

The third vertical guiding surface and the fourth vertical guiding surface are preferably in a second plane, this plane being a second ZX vertical plane.

It has been provided that the longitudinal plane can comprise horizontal guiding surfaces, for example an upper horizontal guiding surface and a lower horizontal guiding surface, and the carriage upper and lower hydrostatic cells that are configured to provide a film of hydrostatic fluid between the carriage and the upper and lower horizontal guiding surfaces, respectively. The upper horizontal guiding surface is preferably arranged between the first and third vertical guiding surfaces to form a longitudinal guiding element between the carriage and the horizontal support crossbeam. Likewise, the lower horizontal guiding surface is preferably arranged between the second and fourth vertical guiding surfaces to form a longitudinal guiding element between the carriage and the horizontal beam. These cells can also incorporate a control for the flow supplied.

The machine tool can comprise a level device to determine the angular displacement of the carriage with respect to the Z axis. This way, the regulation of the vertical position of the tool holder head can be carried out automatically whenever the level detects deviations with respect to the desired position.

The machine can comprise a counterbalancing device to counterbalance the deviations of the vertical columns with respect to the Z vertical axis. This counterbalancing device comprises a brace arranged at the rear part of the vertical columns opposite the position of the tool holder head, with one of its ends tied to the lower part of the vertical column and the other end tied to the upper part of the vertical column, the brace being configured to pull from the upper part of the vertical column. This device makes it possible to, for a certain vertical position of the support crossbeam, counterbalance the deviation of the columns with respect to the vertical plane due to the weight of the tool holder head. This counterbalancing regulation is carried out once for each height of the support crossbeam before the machine begins to work.

Once the work of the machine begins, the head has to move with respect to the crossbeam in the X direction, depending to the works to be carried out. This displacement of the head produces (due to its weight) a torsion on the support crossbeam, which takes place to a greater or lesser extent according to the position of the head in the X direction. This deformation is corrected by means of the hydrostatic cell device of the invention.

### BRIEF DESCRIPTION OF THE DRAWINGS

In order to supplement the description and with the purpose of facilitating a better comprehension of the characteristics of the invention according to a preferred example of a practical embodiment thereof, a set of figures is attached as an integral part of the description representing the following in an illustrative rather than limiting manner:
Figure 1 is a perspective of a machine tool according to a possible embodiment of the invention.
Figure 2 is a schematic representation of the carriage and longitudinal guide with the counterbalancing system of the invention.
Figures 3A, 3B and 3C are perspective representations of the carriage and of the hydrostatic cells.
Figure 4 is a schematic representation of the operation of a hydrostatic cell.
Figure 5 is a lateral view of one of the vertical columns of the machine of figure 1.

### PREFERRED EMBODIMENT OF THE INVENTION

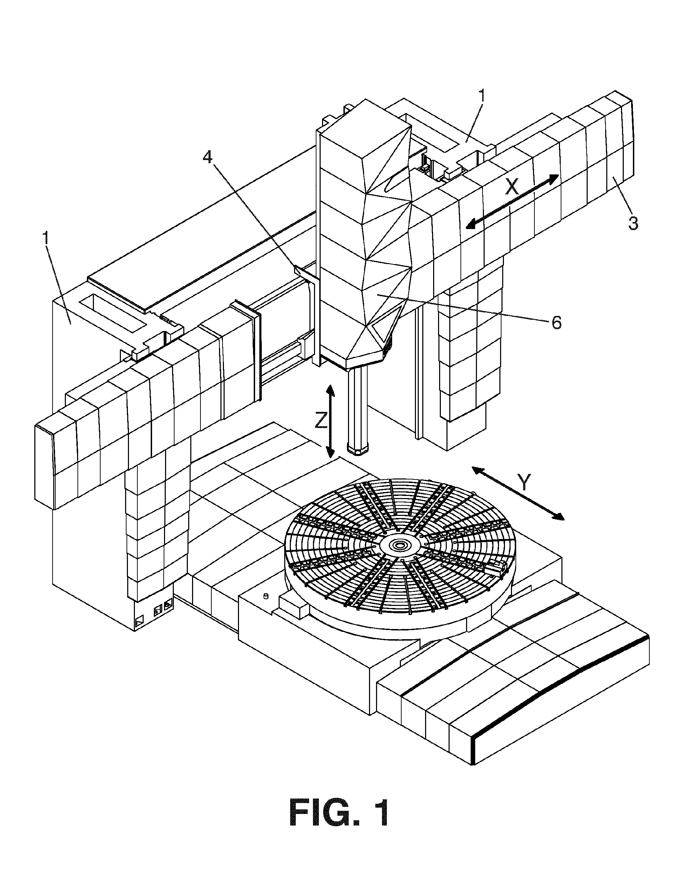

Figure 1 shows a machine tool that comprises two vertical columns (1) and a horizontal support crossbeam (3) that can slide vertically according to a Z axis with respect to the columns (1) by means of vertical guides (1'). The horizontal support crossbeam (3) comprises a longitudinal guide (2) on which a carriage (4) can slide according to an X horizontal direction. The carriage (4) supports a tool holder head (6) that can move in the vertical direction, according to the Z axis, by means of vertical guiding elements (6'). Figure 1 also shows a rotating table (8) to which the workpiece to be machined is tied (not represented). The rotating table (8) can move horizontally according to a Y direction to position the workpiece under the tool.

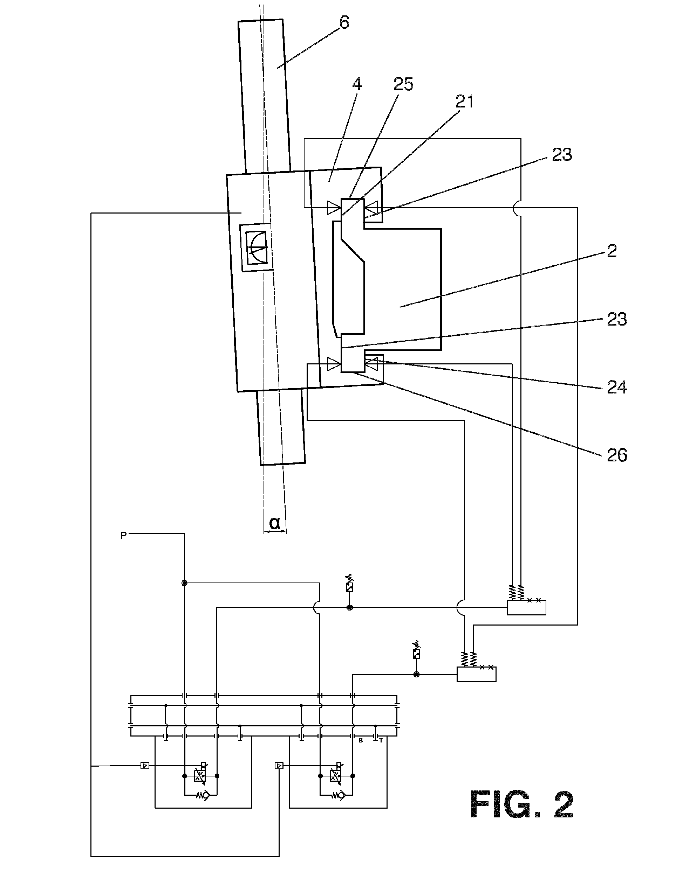

The longitudinal guide (2), as shown in figure 2, comprises a first vertical guiding surface (21) and a second vertical guiding surface (22) parallel but at different heights according to the Z direction, that is to say, at a different height with respect to the ground. The carriage (4) comprises at least one first hydrostatic cell (51) and a second hydrostatic cell (52), which are configured to provide a film of hydrostatic fluid between the carriage (4) and the first and second vertical guiding surfaces (21, 22) of the longitudinal guide (2), respectively. The machine comprises control means (10) of the flow of hydrostatic fluid that can vary the flow of hydrostatic fluid provided to the hydrostatic cells (51, 52) to cause an angular displacement of the carriage (4) with respect to the support crossbeam (3) in a ZY vertical plane (perpendicular to the X axis). Thus, for example, if the flow of hydrostatic fluid supplied to the first hydrostatic cell (51) increases, an anticlockwise angular displacement will be produced according to the view shown in figure 2, while an increase in the flow of hydrostatic fluid in the second hydrostatic cell (52) will produce a clockwise angular displacement according to the view shown in figure 2. This way, in order to correct a lack of verticality in the head (6) as shown in figure 2, the flow of hydrostatic fluid in the second cell (52) needs to be increased. Figure 2 shows a significant angular deviation of the head (6) for a better comprehension of the invention.

Figure 2 also shows a third vertical guiding surface (23), parallel to the first vertical guiding surface (21), and a fourth vertical guiding surface (24), parallel to the second vertical guiding surface (22). According to this embodiment, the carriage (4) comprises a third hydrostatic cell (53) configured to provide a film of hydrostatic fluid between the carriage (4) and the third vertical guiding surface (23), the third hydrostatic cell (53) being hydraulically connected to the second hydrostatic cell (52). Likewise, the carriage (4) comprises a fourth hydrostatic cell (54) configured to provide a film of hydrostatic fluid between the carriage (4) and the fourth vertical guiding surface (24), the fourth hydrostatic cell (54) being hydraulically connected to the first hydrostatic cell (51). Thus, an increase in the flow, for example, in the first hydrostatic cell (51) produces a decrease in the flow of the fourth hydrostatic cell (54) to maintain the hydrostatic pressure between the carriage (4) and the longitudinal guide (2). The same happens between the third hydrostatic cell (53) and the second cell (52).

As shown in the aforementioned figure 2, the third vertical guiding surface (23) faces the first vertical guiding surface (51) in opposite sides of the longitudinal guide (2) to achieve a balanced guiding of the displacement of the carriage (4). The same happens with the fourth vertical guiding surface (24) and the second vertical guiding surface (22).

The first vertical guiding surface (21) and the second vertical guiding surface (22) are in a first XZ vertical plane and the third vertical guiding surface (23) and the fourth vertical guiding surface (24) are in a second XZ vertical plane, both vertical planes being parallel.

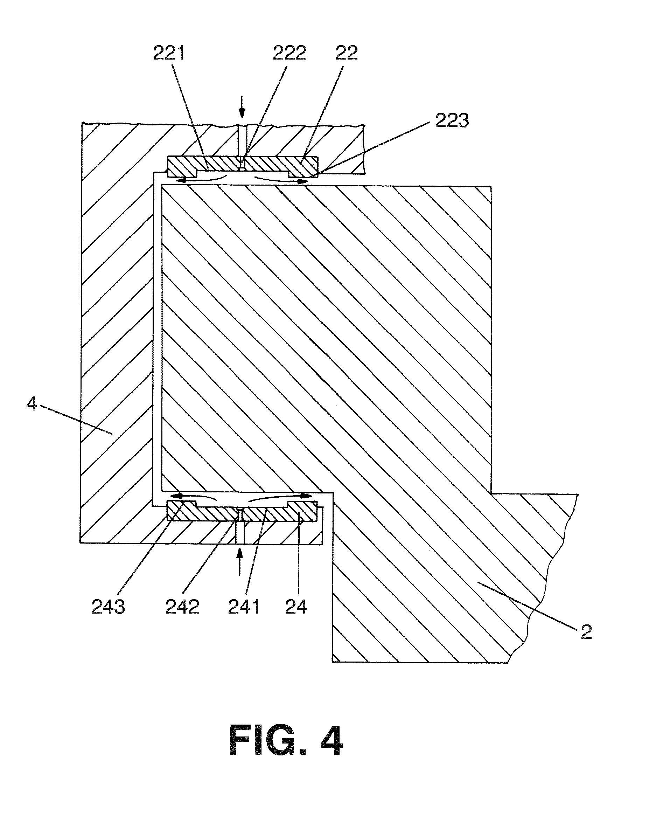

Figure 4 shows the operation of the hydrostatic cells (52, 54) schematically. Each cell or guideway (52, 54) is formed by a housing (5211, 5421) in which a hydrostatic fluid is injected under pressure through one or several holes (5212, 5422) such that when the flow of fluid fills the housing (5211, 5421), it overflows the edges, creating a film of fluid between the edges (5213, 5423) of the hydrostatic cell (52, 54) and the guide (2).

The machine can comprise a level device (9) that can determine the angular displacement of the carriage (4) with respect to the Z axis, such that the machine can automatically regulate the deviations of the head (6). Based on the angular displacement data measured by the level device (9), the control means (10) of the flow of hydrostatic fluid can vary the flow of hydrostatic fluid provided to the first hydrostatic cell (51) or to the second hydrostatic cell (52) as appropriate to counterbalance the deviations of the head (6).

In an embodiment of the machine, the longitudinal guide (2) comprises a first horizontal guiding surface (25) and a second horizontal guiding surface (26), which make it possible to achieve a better displacement of the carriage (4) with respect to the longitudinal guide (2). As shown in figure 2, the first horizontal guiding surface (25) is arranged between the first vertical guiding surface (21) and the third vertical guiding surface (23). The second horizontal guiding surface (26) is arranged between the second vertical guiding surface (22) and the fourth vertical guiding surface (24). In this embodiment, the carriage (4) comprises a first horizontal hydrostatic cell (55) and a second horizontal hydrostatic cell (56) respectively configured to provide a film of hydrostatic fluid between the carriage (4) and the first and second horizontal guiding surfaces (25, 26) of the longitudinal guide (2).

The guide can comprise a third horizontal guiding surface (27) and a fourth horizontal guiding surface (28), parallel and facing the first and second vertical guiding surfaces (25, 26), respectively. In this embodiment, the carriage (4) comprises a third horizontal hydrostatic cell (57) and a fourth horizontal hydrostatic cell (58), respectively configured to provide a film of hydrostatic fluid between the carriage (4) and the third and fourth horizontal guiding surfaces (27, 28) of the longitudinal guide (2). Thus, a balanced horizontal guiding of the carriage with respect to the longitudinal guide (2) is achieved.

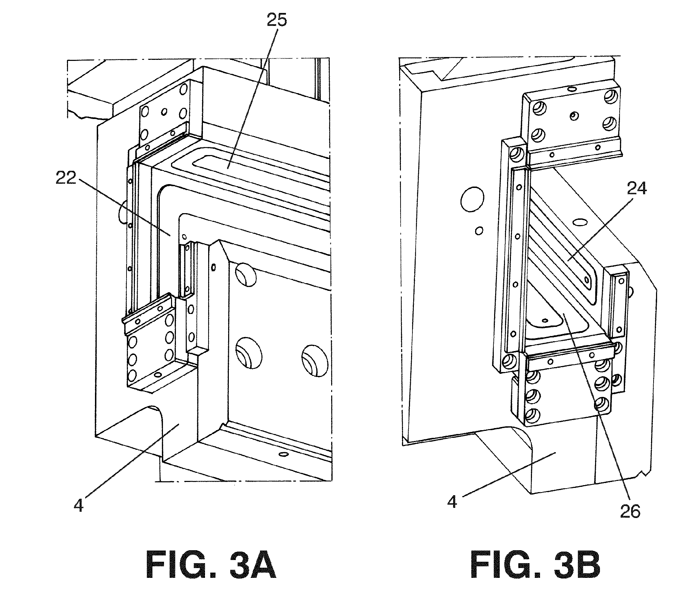

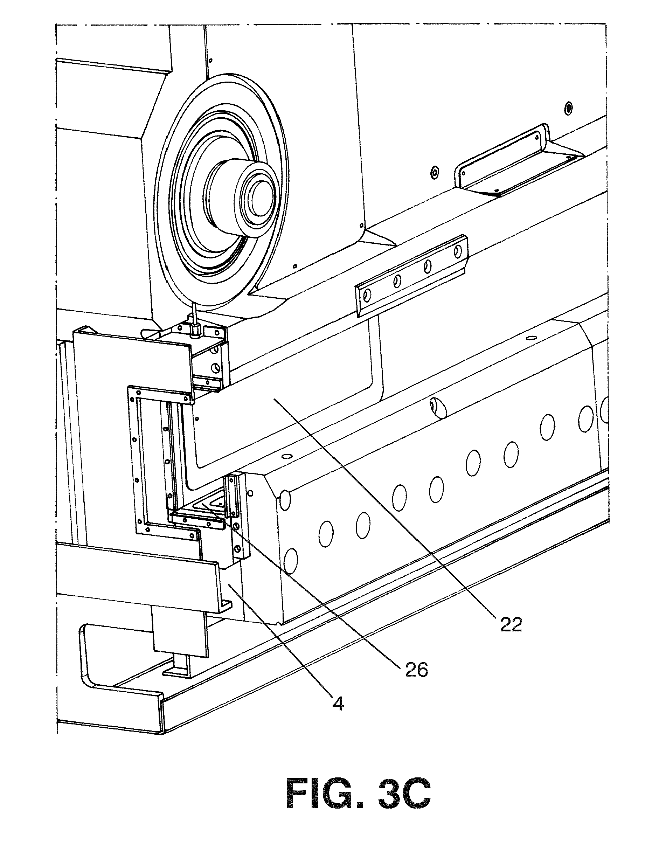

Figures 3A, 3B and 3C show the arrangement of the hydrostatic cells (51, 52, 53, 54, 55, 56, 57 and 58) in the carriage (4).

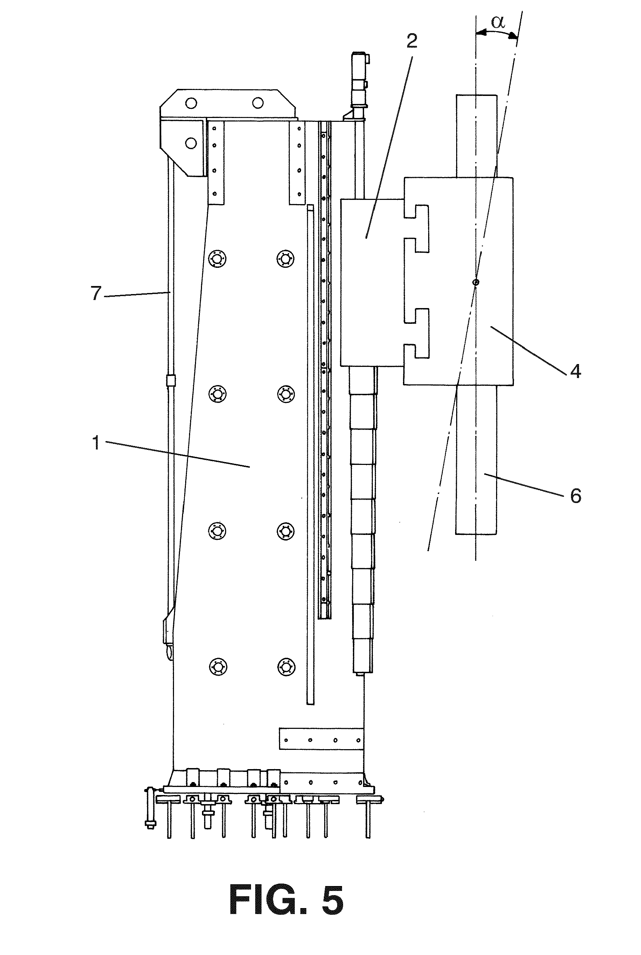

The machine tool can comprise a counterbalancing device to counterbalance the deviations of the vertical columns (1) with respect to the Z vertical axis. In the embodiment shown in figure 5, the counterbalancing device comprises a brace (7) arranged at the rear part of the vertical columns (1) opposite the position of the tool holder head (6), with one of its ends tied to the lower part of the vertical column (1) and the other end tied to the upper part of the vertical column (1), the brace (7) being configured to pull from the upper part of the vertical column (1).

In this text, the word "comprises" and its variants (such as "comprising", etc.) such not be interpreted in an excluding manner, that is to say, they do not exclude the possibility that what is described includes other elements, steps, etc.

On the other hand, the invention is not limited to the specific embodiments described herein, but also covers, for example, the variants that could be carried out by an average expert in the art (for example, in terms of the selection of materials, dimensions, components, configuration, etc.) within what is deduced from the claims.

## Claims

1. Machine tool that comprises two vertical columns (1), a horizontal support crossbeam (3) displaceable vertically in a (Z) vertical direction, in a guided manner in the two vertical columns (1), and at least one carriage (4) that supports a tool holder head (6), the support crossbeam (3) comprising a longitudinal guide (2) on which the carriage can slide in a (X) horizontal direction, **characterized in that** the horizontal guide comprises a first vertical guiding surface (21) and a second vertical guiding surface (22) separated according to the (Z) vertical direction, **in that** the carriage (4) comprises at least a first hydrostatic cell (51) and a second hydrostatic cell (52), which are configured to provide a film of hydrostatic fluid between the carriage (4) and the first and second vertical guiding surfaces (21, 22) of the longitudinal guide (2), respectively, and **in that** it comprises control means (10) of the flow of hydrostatic fluid that can vary the flow of hydrostatic fluid provided by at least one of the hydrostatic cells (51, 52) to cause an angular displacement of the carriage (4) with respect to the support crossbeam (3) in a vertical plane perpendicular to the X axis.

2. Machine tool according to claim 1, wherein the longitudinal guide (2) comprises:
a third vertical guiding surface (23), parallel to the first vertical guiding surface (21), and the carriage (4) comprises a third hydrostatic cell (53) configured to provide a film of hydrostatic fluid between the carriage (4) and the third vertical guiding surface (23), the third cell (53) being hydraulically connected to the second cell (52);
a fourth vertical guiding surface (24), parallel to the second vertical guiding surface (22), and the carriage (4) comprises a fourth hydrostatic cell (54) configured to provide a film of hydrostatic fluid between the carriage (4) and the fourth vertical guiding surface (24), the fourth cell (54) being hydraulically connected to the first cell (51).

3. Machine tool according to claim 2, wherein the first vertical guiding surface (21) and the second vertical guiding surface (22) are in a first vertical plane.

4. Machine tool according to any one of the claims 2 or 3, wherein the third vertical guiding surface (23) and the fourth vertical guiding surface (24) are in a second vertical plane.

5. Machine tool according to any one of the preceding claims, which comprises a level device (9) that can determine the angular displacement of the carriage (4) with respect to the Z axis.

6. Machine tool according to any one of the preceding claims, which comprises a counterbalancing device to counterbalance the deviations of the vertical columns (1) with respect to the Z vertical axis.

7. Machine tool according to claim 6, wherein the counterbalancing device comprises a brace (7) arranged at the rear part of the vertical columns (1) opposite the position of the tool holder head (6), with one of its ends tied to the lower part of the vertical column (1) and the other end tied to the upper part of the vertical column (1), the brace (7) being configured to pull from the upper part of the vertical column (1).
